Europäisches Patentamt

European Patent Office

Office européen des brevets

(19)

(11) **EP 1 517 461 A2**

(12) **EUROPEAN PATENT APPLICATION**

(43) Date of publication:
**23.03.2005 Bulletin 2005/12**

(51) Int Cl.⁷: **H04B 10/155**

(21) Application number: **04019317.9**

(22) Date of filing: **13.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **16.09.2003 KR 2003064073**

(71) Applicant: **Samsung Electronics Co., Ltd.**
**Suwon-si, Gyeonggi-do (KR)**

(72) Inventors:
• **Lee, Han-Lim**
**Yeongtong-gu, Suwon-si, Gyeonggi-do (KR)**

• **Kim, Hoon**
**Yeongtong-gu, Suwon-si, Gyeonggi-do (KR)**
• **Oh, Yun-Je**
**Yeongtong-gu, Suwon-si, Gyeonggi-do (KR)**
• **Hwang, Seong-Taek**
**Yeongtong-gu, Suwon-si, Gyeonggi-do (KR)**
• **Kim, Sung-Kee**
**Yeongtong-gu, Suwon-si, Gyeonggi-do (KR)**
• **Lee, Gyu-Woong**
**Yeongtong-gu, Suwon-si, Gyeonggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Optical duobinary transmission device**

(57)    A duobinary optical transmission device that uses a duobinary optical transmission technique is disclosed. The duobinary optical transmission device may use an X-cut Mach-Zehnder interferometer type modulator. The duobinary optical transmission device includes a light source that outputs a carrier wave. A duobinary encoder encodes an input non-return-to-zero (NRZ) electrical signal. A low pass filter (LPF) converts the encoded signal into a 3-level electrical signal. An optical intensity modulator modulates the phase and light intensity of the carrier wave according to the 3-level electrical signal and outputs a 2-level optical duobinary signal. The optical intensity modulator may be an X-cut optical intensity modulator including a substrate; an optical waveguide formed on the substrate, and an electrode for applying an electric field.

300

FIG.3

EP 1 517 461 A2

**Description**

**BACKGROUND OF THE INVENTION**

1. Field of the Invention

The present invention relates to an optical transmission device that may use a duobinary optical transmission technique, and more particularly to a duobinary optical transmission device using an X-cut Mach-Zehnder interferometer type modulator.

2. Description of the Related Art

A conventional optical transmission system that uses dense wavelength division multiplexing (DWDM) transmits an optical signal consisting of a plurality of channels having different wavelengths to a single optical fiber. Because such an optical transmission system can transmit the optical signal irrespective of a transmission speed, it is useful for very high-speed Internet networks. Such systems can transmit at least 100 channels through a single optical fiber using DWDM.

While systems having higher transmission speeds for simultaneously transmitting more channels to the single optical fiber is desirable, The extension of transmission capacity is limited due to interference and distortion between channels. For example, this is problematic at a channel interval of 50 GHz or less when performing optical intensity modulation using existing non-return-to-zero (NRZ) according to data transmission demand of 40 Gbps or more. When a direct current (DC) frequency component of an existing binary NRZ transmission signal and a high-frequency component spread in modulation are propagated in an optical fiber medium, non-linearity and dispersion are caused and hence a transmission distance is limited in the high-speed transmission of 10 Gbps or more.

Optical duobinary technology is one possible optical transmission technology that may be capable of overcoming the limitation of a transmission distance due to chromatic dispersion. Duobinary transmission reduces the transmission spectrum in comparison with other conventional transmission schemes. In a dispersion-limited system, the transfer distance is inversely proportional to a square of the transmission spectrum bandwidth value. This means that the transfer distance increases four times when the transmission spectrum is reduced by 1/2. In addition, as the carrier frequency is suppressed within a duobinary transmission spectrum, the limitation of output optical power due to Brillouin scattering stimulated within an optical fiber can be mitigated.

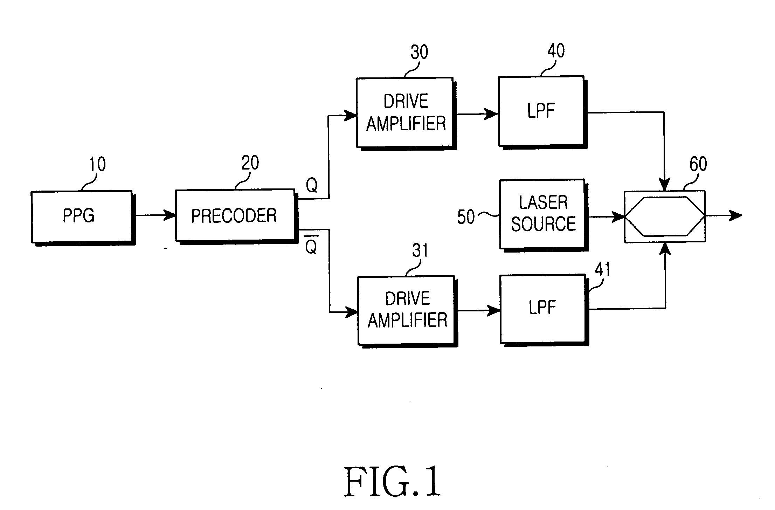

FIG. 1 is a block diagram illustrating the configuration of a conventional duobinary optical transmission device.

In FIG. 1, the conventional duobinary optical transmission device includes a pulse pattern generator (PPG) 10 for generating a non-return-to-zero (NRZ) electrical pulse signal based on two levels; a precoder 20 for encoding the 2-level NRZ electrical signal; drive amplifiers 30 and 31 for amplifying the encoded 2-level signal output from the precoder 20 so that a modulator drive operation can be carried out; low pass filters (LPFs) 40 and 41 for converting amplified electrical signals into 3-level electrical signals and reducing bandwidths of the signals; a laser source 50 for outputting a carrier wave; and a Mach-Zehnder interferometer type optical intensity modulator 60.

The Mach-Zehnder interferometer type optical intensity modulator 60 uses phase modulation. FIG. 1 shows the case where the Mach-Zehnder interferometer type optical intensity modulator based on a Z-cut dual-arm structure is used. In FIG. 1, "$\overline{Q}$" denotes an inversion signal of "Q". The 3-level duobinary signals are input into the arms of the Mach-Zehnder interferometer type optical intensity modulator 60 through the drive amplifiers 30 and 31 and the LPFs 40 and 41 arranged at both the arms of the modulator 60, respectively.

The 2-level pulse signal generated by the PPG 10 is encoded by the precoder 20. The output 2-level pulse signals are amplified to the magnitude of signals for driving the modulator by the drive amplifiers 30 and 31. The amplified 2-level pulse signals are input into the LPFs 40 and 41. The LPFs 30 and 31 have a bandwidth corresponding to approximately 1/4 of a clock frequency of the 2-level binary signal, respectively. Interference between codes due to an excessive limit of the bandwidth occurs, and the 2-level binary signals are converted into 3-level duobinary signals because of the interference between codes. The 3-level duobinary signals are used as signals for driving the Mach-Zehnder interferometer type optical intensity modulator 60. A phase and light intensity of the carrier wave output from the laser source 50 are modulated according to the drive signals input into the Mach-Zehnder interferometer type optical intensity modulator 60, such that an optical duobinary signal based on two levels is output.

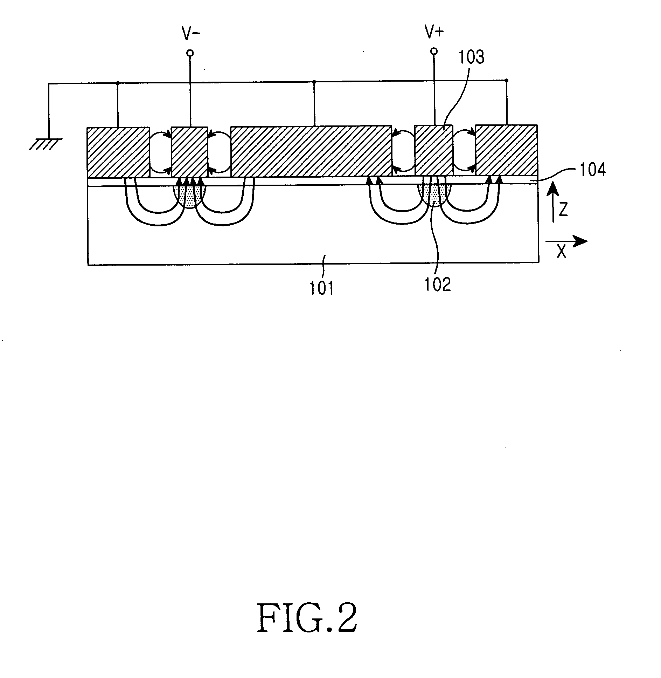

FIG. 2 is a cross-section view illustrating a Mach-Zehnder optical intensity modulator based on a Z-cut dual-arm structure. The Z-cut Mach-Zehnder optical intensity modulator includes a $LiNbO_3$ substrate 101, an optical waveguide 102 and electrodes 103. The Z-cut Mach-Zehnder optical intensity modulator also includes a buffer layer 104 so that a light wave going through the optical waveguide 102 does not endure ohmic loss. In FIG. 2, X and Z denote axial directions. FIG. 2 shows the case where crystal is cut in the Z axial direction (referred to as a Z-cut structure). Furthermore, arrows shown between devices indicate electric field directions in FIG. 2.

Operation of the Mach-Zehnder optical intensity modulator is as follows. Input light is branched to two paths by the optical waveguide 102 and endures different amounts of phase modulation by external electric fields applied to the electrodes 103. An output terminal of the waveguide 102 outputs input light power according to constructive interference when light waves of the two paths are in-phase components. When the light waves of the two paths are quadrature phase components, destructive interference occurs and light is radiated to the substrate 101, such that the output light power drops to zero.

However, there are several shortcomings of the conventional devices discussed above. For example, because the conventional optical transmission device requires two drive amplifiers and two LPFs, its manufacturing cost is increased. In addition, all the components (containing drive amplifiers, LPFs, a Mach-Zehnder optical intensity modulator, etc.) must be symmetrical with respect to both arms and must have the same gain, bandwidth and delay time characteristics. This requires that the components must be very carefully selected. Moreover, additional components (e.g., a delay device) may be required for reducing any characteristic differences between both arms. This adds additional manufacturing cost to such systems.

## SUMMARY OF THE INVENTION

One aspect of the present invention is related to a cost-effective duobinary optical transmission device using a modulator without a buffer layer. This simplifies the manufacturing process and reduces the manufacturing cost in comparison with a conventional modulator with the buffer layer.

One embodiment of the present invention is directed to a duobinary optical transmission device including a light source for outputting a carrier wave, a duobinary encoder for encoding an input non-return-to-zero (NRZ) electrical signal and a low pass filter (LPF) for converting the encoded signal into a 3-level electrical signal. The device also includes an optical intensity modulator for modulating a phase and light intensity of the carrier wave according to the 3-level electrical signal and outputting a 2-level optical duobinary signal. The optical intensity modulator is an X-cut optical intensity modulator including a substrate; an optical waveguide formed on the substrate; and an electrode for applying an electric field.

In another embodiment, the X-cut optical intensity modulator is an X-cut Mach-Zehnder interferometer type modulator without a buffer layer between the optical waveguide and the electrode.

In yet another embodiment, the duobinary optical transmission device includes a drive amplifier for amplifying the encoded signal so that the modulator can be driven in response to the amplified encoded signal.

Another embodiment of the present invention is directed to a duobinary optical transmission device including a light source for outputting a carrier wave as an optical signal; a duobinary encoder for encoding an inputted non-return-to-zero (NRZ) electrical signal; and an optical intensity modulator for modulating a phase and light intensity of the carrier wave in response to the encoded signal. The device also includes an optical band pass filter (OBPF) for carrying out a filtering operation according to a designated band in response to the modulated optical signal from the optical intensity modulator. The optical intensity modulator is an X-cut Mach-Zehnder optical intensity modulator including a substrate; an optical waveguide formed on the substrate; and an electrode for applying an electric field.

## BRIEF DESCRIPTION OF THE DRAWINGS

The above and other aspects, features and embodiments of the present invention will be more clearly understood from the following detailed description taken in conjunction with the accompanying drawings, in which:

FIG. 1 is a block diagram illustrating one configuration of a conventional duobinary optical transmission device;

FIG. 2 is a cross-section view illustrating a Mach-Zehnder optical intensity modulator based on a Z-cut dual-arm structure;

FIG. 3 is a block diagram illustrating the configuration of a duobinary optical transmission device in accordance with one embodiment of the present invention;

FIG. 4 is a cross-section view illustrating an X-cut Mach-Zehnder modulator applied to one embodiment of the present invention;

FIGS. 5A and 5B are eye diagrams illustrating transmission characteristics after transmission operations associated with transmission distances of 0 km and 150 km are performed by a standard single-mode optical fiber at a transmission rate of 10 Gbps using the duobinary optical transmission devices shown in FIGS. 3 and 1;

FIG. 6 is a graph illustrating transmission characteristics when a transmission operation associated with a transmission distance between 0 km and 200 km is performed by a standard single-mode optical fiber at a transmission rate of 10 Gbps using the duobinary optical transmission device shown in FIG. 3 in accordance with an embodiment the present invention; and

FIG. 7 is a block diagram illustrating the configuration of another duobinary optical transmission device in accordance with anther embodiment of the present invention.

## DETAILED DESCRIPTION

Now, embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may obscure the subject matter of the present invention.

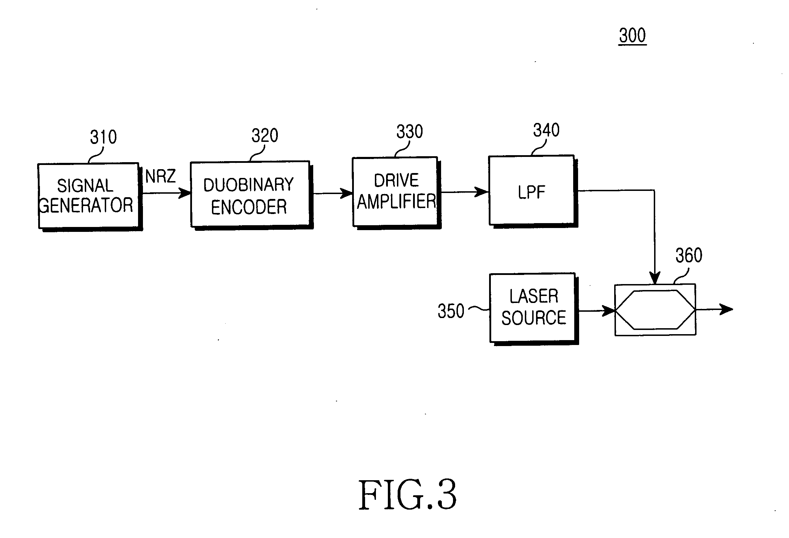

FIG. 3 is a block diagram illustrating the configuration of a duobinary optical transmission device 300 in accordance with one embodiment of the present invention.

Referring to FIG. 3, the duobinary optical transmission device 300 includes a signal generator 310 for generating a 2-level non-return-to-zero (NRZ) data signal; a duobinary encoder 320 for encoding the 2-level NRZ data signal; a low pass filter (LPF) 340 for converting the encoded 2-level NRZ data signal into a 3-level electrical signal and reducing a bandwidth of the signal; a light source 350 for outputting a carrier wave; and an optical intensity modulator 360. The duobinary optical transmission device 300 also includes a drive amplifier 330 for amplifying the encoded signal so that the optical intensity modulator 360 can be driven in response to the amplified encoded signal.

The signal generator 310 generates the 2-level NRZ data signal. The signal generator 310 can be implemented, for example, by a pulse pattern generator (PPG) generating an electrical pulse signal.

The duobinary encoder 320 encodes the 2-level NRZ data signal. The duobinary encoder 320 can be implemented, for example, by a precoder.

The drive amplifier 330 amplifies the encoded signal so that the amplified encoded signal can drive the modulator 350.

The LPF 340 has a bandwidth corresponding to approximately 1/4 of a clock frequency of the encoded 2-level NRZ data signal. If interference between codes due to an excessive limit of the bandwidth occurs, the 2-level binary signal is converted into a 3-level duobinary signal because of the interference between codes.

The light source 350 generates/outputs the carrier wave. The light source 350 can be implemented, for example, by a laser diode (LD).

The optical intensity modulator 360 may use phase modulation. The optical intensity modulator 360 can be implemented, for example, by an X-cut Mach-Zehnder modulator without a buffer layer.

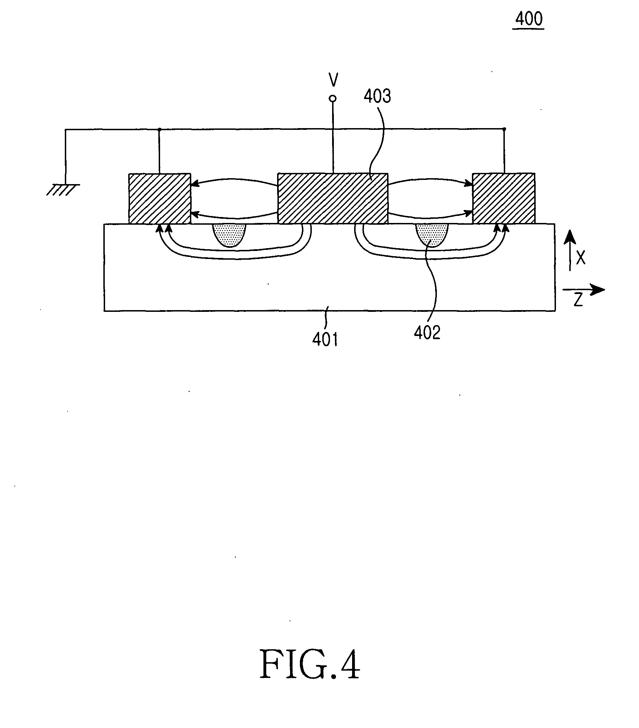

FIG. 4 is a cross-section view illustrating an X-cut Mach-Zehnder modulator 400 applied to one embodiment of the present invention. The X-cut Mach-Zehnder modulator 400 includes an elecrooptic substrate 401 such as a LiNbO$_3$ substrate, an optical waveguide 402 and electrodes 403. In FIG. 4, X and Z denote axial directions. FIG. 4 shows the case where the crystal is cut in the Z axial direction (referred to as a Z-cut structure). Furthermore, arrows shown between devices indicate electric field directions.

One feature that is different about the X-cut Mach-Zehnder modulator 400 shown in FIG. 4 from the Z-cut modulator shown in FIG. 2 in that the optical waveguide 402 is located between electrodes 403 and no buffer layer is present in the modulator 400 shown in FIG. 4. The X-cut Mach-Zehnder modulator 400 has a Vphi x L value reduced by 30% in comparison with the Z-cut modulator in which the optical waveguide is formed below the electrode. The X-cut Mach-Zehnder modulator 400 has the high efficiency of electrooptic conversion. Here, Vphi denotes a half-wave voltage and L denotes an electrode length.

According to the efficiency of electrooptic conversion, the driving voltage serving, which is an important factor of the modulator, is low as compared to the conventional devices discussed above. In addition, the chip length is short as compared to the conventional devices discussed above, which means that the manufacturing yield is improved because the number of chips produced from one wafer increases. However, because optical velocity and electrical velocity are different, the bandwidth is limited by velocity mismatching, and the total of an electrode length value multiplied by a bandwidth value is limited to a value of approximately 8 GHz x cm. Due to such a bandwidth limit, the X-cut Mach-Zehnder modulator without a buffer layer has been employed only in an application based on 2.5 Gbps. The merits and drawbacks between an X-cut modulator with a buffer layer and an X-cut modulator without a buffer layer are described in the following Table 1.

Table 1

|  | X-cut modulator with buffer layer | X-cut modulator without buffer layer |
| --- | --- | --- |
| Manufacturing process | Complex | Simple |
| Vphi | High | Low |
| Chip length | Long | Short |

Table 1   (continued)

|  | X-cut modulator with buffer layer | X-cut modulator without buffer layer |
|---|---|---|
| Velocity matching | Necessary | Unnecessary |
| Resistance | $\sim 50$ Ohm | $\sim 25$ Ohm |
| Bandwidth | > 5 GHz | 4 $\sim$ 5 GHz |
| Application | > 10 Gbps | 2.5 Gbps |

In one embodiment, the X-cut Mach-Zehnder modulator without a buffer layer having the bandwidth limit is applied to a 10 Gbps duobinary optical transmission device. In this embodiment, the X-cut Mach-Zehnder modulator can obtain a bandwidth of approximately 4 GHz. Because the signal is filtered by a low pass filter (LPF) having a bandwidth corresponding to 1/4 of an operating speed in, case of a duobinary signal, the duobinary signal can be transmitted without quality or transmission characteristic degradation, although the bandwidth of the modulator is limited. It is also noted that when the LPF's bandwidth is properly increased, the quality of an optical duobinary signal can be improved. For example, when a 4 GHz bandwidth modulator is used, the receiver sensitivity is improved by 2.5 dB as the LPF's bandwidth is increased from 2.7 GHz to 3.4 GHz.

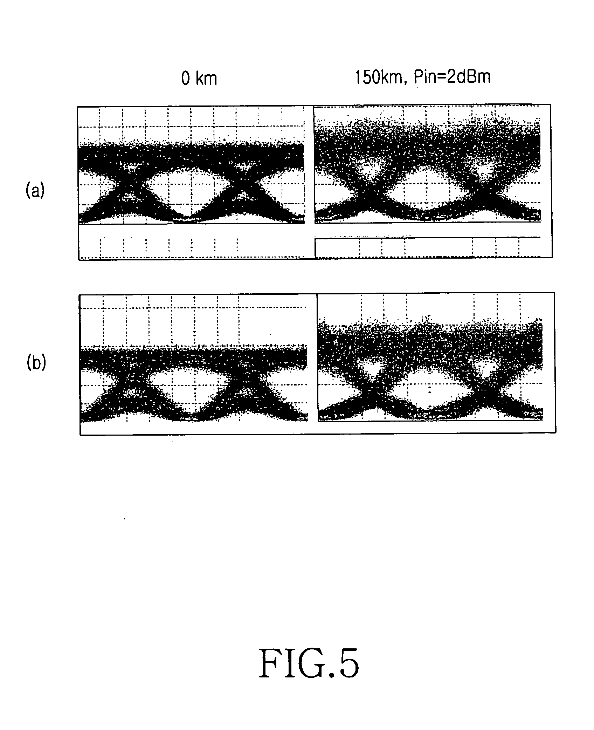

FIGS. 5A and 5B show characteristics of the duobinary optical transmission device shown in FIG. 3. In more detail, FIGS. 5A and 5B are eye diagrams illustrating transmission characteristics after transmission operations associated with transmission distances of 0 km and 150 km are performed by a standard single-mode optical fiber at a transmission rate of 10 Gbps using the duobinary optical transmission devices shown in FIGS. 3 and 1. In FIGS. 5A and 5B, it can be found that a characteristic difference between the eye diagrams based on the 0 km and 150 km transmissions is almost non-existent.

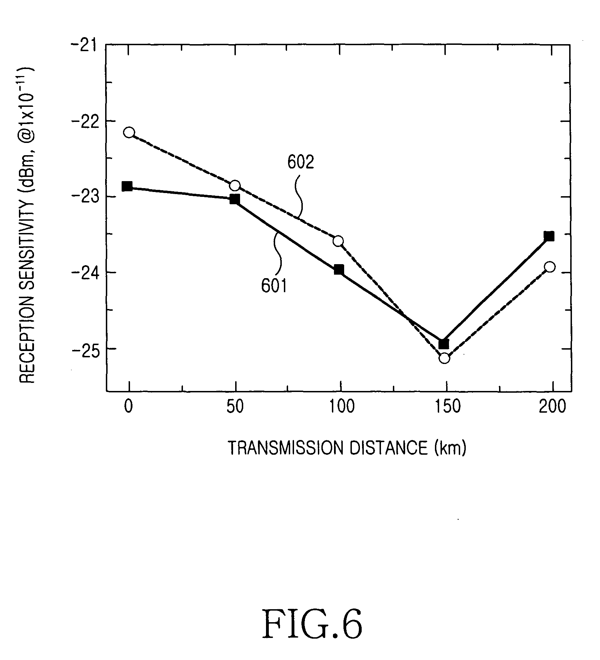

FIG. 6 is a graph illustrating an example of comparing a transmission characteristic 601 using the duobinary optical transmission device according to embodiment shown in FIG. 3 with a transmission characteristic 602 using the conventional duobinary optical transmission device shown in FIG. 1 in a transmission distance between 0 km and 200 km at a transmission rate of 10 Gbps. In FIG. 6, a duobinary signal 601 and a conventional duobinary signal 602 show characteristics of highest reception sensitivity at a transmission distance of 150 km. It can be seen that the duobinary signals 601 and 602 show similar characteristics in that the reception sensitivity of approximately -23.5 dBm is obtained at a transmission distance of 200 km. The bandwidth of the X-cut modulator without a buffer layer used in this test is 4 GHz, while the bandwidth of the X-cut modulator with a buffer layer used in this test is 9 GHz. Furthermore, the test has been performed using a pseudo random bit sequence (PRBS) having a length of $2^{31}$-1.

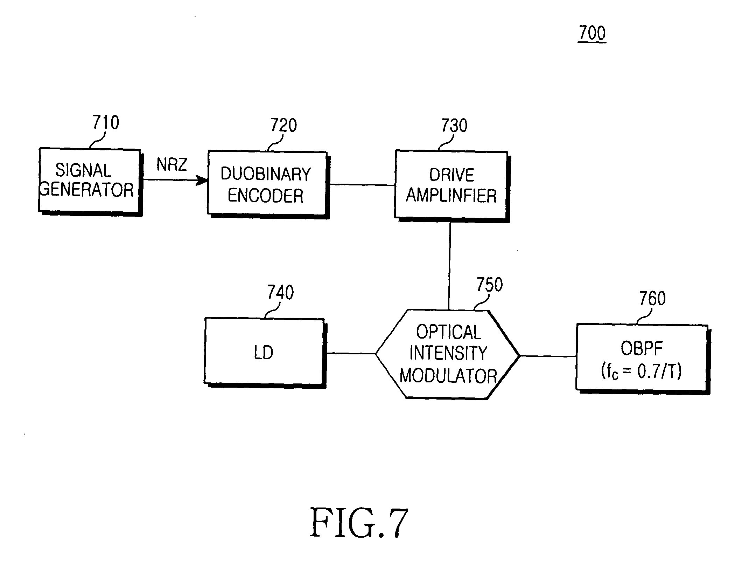

FIG. 7 is a block diagram illustrating the configuration of another duobinary optical transmission device 700 in accordance with another embodiment of the present invention.

Referring to FIG. 7, the duobinary optical transmission device 700 includes a signal generator 710 for generating a 2-level non-return-to-zero (NRZ) data signal; a duobinary encoder 720 for encoding the 2-level NRZ data signal; a light source 740 for outputting a carrier wave; an optical intensity modulator 750; and an optical band pass filter (OBPF) 760. The duobinary optical transmission device 700 also includes a drive amplifier 730 for amplifying the encoded signal so that the optical intensity modulator 750 can be driven in response to the amplified encoded signal. The signal generator 710, the duobinary encoder 720, the drive amplifier 730, the light source 740 and the optical intensity modulator 750 are similar to the components of the embodiment shown in FIG. 3.

As the configuration of this embodiment includes the OBPF 760 at an output terminal of the modulator 750, the optical intensity modulator 750 modulates phase and light intensity, such that an optical duobinary signal can be generated. The bandwidth of the OBPF 760 is a 0.7 multiple of a data transmission bit rate. When an output signal of the modulator 750 goes through the OBPF 760, the duobinary transmitter performs the same function as the conventional duobinary transmitter using the electrical LPF, such that a conversion operation to a duobinary signal is performed. In this embodiment, the bandwidth of the OBPF 760 is a 0.7 multiple of a data transmission bit rate has been described as an example. However, the transmission characteristics of an optical duobinary signal can be adjusted by adjusting the bandwidth of the OBPF 760. In this case, no LPF is required. Thus, no 3-level signal is generated, and signal characteristic degradation according to a PRBS length is not caused.

Various embodiments of present invention can significantly reduce manufacturing cost of a transmitter while maintaining a merit of a duobinary signal immune to chromatic dispersion by applying an X-cut optical intensity modulator without a buffer layer to a 10 Gbps duobinary optical transmission device.

Furthermore, various embodiments of the present invention enable a duobinary signal to have crossed phase characteristics using an X-cut optical intensity modulator and an optical band pass filter (OBPF) without an electrical low pass filter (LPF). Thus, the limitation of transmission quality due to an electrical filter can be overcome and an optical transmission system based on high-speed and dense wavelength division multiplexing (DWDM) can be implemented.

Although the above embodiments of the present invention have been disclosed for illustrative purposes, those skilled in the art will appreciate that various modifications, additions and substitutions are possible, without departing from the scope of the invention. Therefore, the present invention is not limited to the above-described embodiments, but the present invention is defined by the claims that follow, along with their full scope of equivalents.

**Claims**

1. A duobinary optical device (300), comprising:

   a light source (350) for outputting a carrier;

   a duobinary encoder (320) for encoding a non-return-to-zero, NRZ, signal;

   a low pass filter (340), LPF, for converting the encoded signal into a 3-level electrical signal; and

   an optical intensity modulator (360) for modulating a phase and light intensity of the carrier according to the 3-level electrical signal and outputting a 2-level optical duobinary signal,

   wherein the optical intensity modulator (360) is an X-cut optical intensity modulator.

2. The duobinary optical device (300) as set forth in claim 1, where in the X-cut optical intensity modulator includes a substrate (401), an optical waveguide formed on the substrate (401), and an electrode (403) for applying an electric field corresponding to the 3-level electrical signal.

3. The duobinary optical device (300) as set forth in claim 2, wherein the X-cut optical intensity modulator is an X-cut Mach-Zehnder interferometer type modulator (400) wherein the electrode (403) is located between optical waveguides (402).

4. The duobinary optical device(300) as set forth in claim 1, 2 or 3, further comprising:

   a drive amplifier (330) for amplifying the encoded signal so that the modulator (360) can be driven in response to the amplified encoded signal.

5. The duobinary optical device (300) as set forth in claim 1, 2 or 3, further comprising:

   a drive amplifier (330) for amplifying the 3-level electrical signal so that the modulator (360) can be driven in response to the amplified 3-level electrical signal.

6. The duobinary optical device (300) as set forth in claim 4 or 5, wherein output magnitude of the drive amplifier (330) can be adjusted.

7. The duobinary optical device (300) as set forth in any one of the claims 1 to 6, wherein a bandwidth of the LPF (340) can be adjusted

8. A duobinary optical device (700), comprising:

   a light source (740) for outputting a carrier wave as an optical signal;

   a duobinary encoder (720) for encoding an input non-return-to-zero NRZ electrical signal;

   an optical intensity modulator (750) for modulating a phase and light intensity of the carrier wave in response to the encoded signal; and

   an optical band pass filter (760), OBPF, arranged to filter the modulated optical signal from the optical intensity modulator (750) and output an optical duobinary signal,

wherein the optical intensity modulator (750) is an X-cut Mach-Zehnder optical intensity modulator.

9.  The duobinary optical device (700) as set forth in claim 8, wherein the X-cut mach-Zehnder optical intensity modulator includes a substrate (401);
    an optical waveguide (402) formed on the substrate (401); and
    an electrode (403) for applying an electric field corresponding to the 3-level signal.

10. The duobinary optical device (700) as set forth in claim 9, wherein the X-cut Mach-Zehnder optical intensity modulator is an X-cut Mach-Zehnder interferometer type modulator wherein the electrode (403) is located between optical waveguides (402).

11. The duobinary optical device (700) as set forth in claim 8, 9 or 10, further comprising:

    a drive amplifier (730) for amplifying the encoded signal so that the modulator (750) can be driven in response to the amplified encoded signal.

12. The duobinary optical device (700) as set forth in claim 11, wherein output magnitude of the drive amplifier (730) can be adjusted.

13. The duobinary optical transmission device as set forth in any one of the claims 8 to 12, wherein a bandwidth of the OBPF (760) can be adjusted.

FIG.1

FIG.2

300

310 — SIGNAL GENERATOR → NRZ → 320 DUOBINARY ENCODER → 330 DRIVE AMPLIFIER → 340 LPF

350 — LASER SOURCE → 360

FIG.3

EP 1 517 461 A2

FIG.4

0 km                    150km, Pin=2dBm

(a)

(b)

FIG.5

FIG.6

EP 1 517 461 A2

FIG.7